# EUROPÄISCHE PATENTSCHRIFT

(11) **EP 1 673 245 B1**
(45) Veröffentlichungstag und Bekanntmachung des Hinweises auf die Patenterteilung: **01.04.2009**
(21) Anmeldenummer: 04765131.0
(22) Anmeldetag: 13.09.2004
(51) Int. Cl.: B60H 1/00, F25B 13/00

(54) **KLIMAANLAGE MIT WÄRMEPUMPE**
AIR-CONDITIONING SYSTEM PROVIDED WITH A HEAT PUMP
INSTALLATION DE CLIMATISATION COMPRENANT UNE THERMOPOMPE

(30) Priorität: 06.10.2003 DE 10346823
(43) Veröffentlichungstag der Anmeldung: 28.06.2006
(73) Patentinhaber: Behr GmbH & Co. KG, 70469 Stuttgart (DE)
(72) Erfinder: BARUSCHKE, Wilhelm, 73117 Wangen (DE); BRITSCH-LAUDWEIN, Armin, 71272 Renningen (DE); LOCHMAHR, Karl, 71665 Vaihingen (DE)
(74) Vertreter: Nestler, Jan Hendrik
(86) Internationale Anmeldenummer: PCT/EP2004/010209
(87) Internationale Veröffentlichungsnummer: WO 2005/037582

(56) Entgegenhaltungen:
- EP-A- 1 134 516
- WO-A-03/051657
- US-A- 3 299 662
- US-A- 4 702 088
- US-A- 5 092 134
- US-A1- 2001 052 238

## Beschreibung

Die Erfindung betrifft eine Klimaanlage, insbesondere für ein Kraftfahrzeug, gemäß dem Oberbegriff des Anspruchs 1. Eine solche Klimaanlage ist aus der WO 03/051657 A1 bekannt.

Eine weitere Klimaanlage ist aus der DE 36 35 353 bekannt, bei der die Klimaanlage auch als Wärmepumpe betrieben werden kann, wobei die Energie, die dem Kältekreislauf zugeführt werden muss, aus der Verlustenergie des Kraftfahrzeuges stammt, also aus der Wärmeenergie des heißen Kühlmittels, die ansonsten ungenutzt über den Kühler des Kraftfahrzeugs an die Umgebung abgeführt werden würde. Dazu ist ein Wärmetauscher vorgesehen, der im Heizbetrieb der Klimaanlage als Verdampfer für das Kältemittel dient, wobei die Energie zur Verdampfung des Kältemittels dem heißen Motorkühlmittel entnommen wird, so dass durch die Ausnutzung der Kühlmittelenergie das Kältemittel verdampft.

Eine derartige Klimaanlage lässt jedoch noch Wünsche offen.

Es ist Aufgabe der Erfindung, eine verbesserte Klimaanlage mit Wärmepumpenfunktion zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist eine Klimaanlage, insbesondere Kraftfahrzeug-Klimaanlage, mit einem Kreislauf vorgesehen, in dem ein Kältemittel-Verdichter, ein Gaskühler, ein innerer Wärmetauscher, ein Expansionsorgan und ein Verdampfer angeordnet ist, wobei für einen Wärmepumpen-Betrieb eine Vorrichtung zur Umkehr der Strömungsrichtung des Kältemittels vorgesehen ist, und Mittel vorgesehen sind, die den inneren Wärmetauscher bei umgekehrter Strömungsrichtung außer Funktion setzen. Im Normalbetrieb, d.h. im AC-Betrieb, sind die Kältemittelströme vom Gaskühler (erster Wärmetauscher) zum Expansionsorgan sowie vom Verdampfer (zweiter Wärmetauscher) zum Kältemittel-Verdichter über den inneren Wärmetauscher thermisch gekoppelt. Im Wärmepumpen-Betrieb wird hingegen der innere Wärmetauscher umgangen, so dass keine thermische Kopplung zwischen den Kältemittelströmen erfolgt. Die gesamte Anordnung ermöglicht eine einfache Darstellung einer Wärmepumpe ohne zusätzliche Komponenten im Kältemittel-Kreislauf.

Die Mittel, die den inneren Wärmetauscher bei umgekehrter Strömungsrichtung außer Funktion setzen, umfassen erfindungsgemäß zwei Rückschlagventile, die in entsprechenden, parallel zum inneren Wärmetauscher vorgesehenen Leitungen angeordnet sind. Dabei sind die Rückschlagventile am oder im inneren Wärmetauscher vorgesehen.

Die Vorrichtung zur Umkehr der Strömungsrichtung wird erfindungsgemäß durch eine entsprechende Möglichkeit der Umschaltung auf eine Überkreuzschaltung von Saugdruck- und Hochdruckanschluss am oder im Kältemittel-Verdichter gebildet.

Im Kreislauf ist vorzugsweise ein Expansionsorgan mit zwei antiparallelen Bypässen vorgesehen. Dies ist bevorzugt ein Orifice-Expansionsorgan mit zwei strömungsrichtungsabhängigen antiparallelen Bypässen.

Beim Wärmepumpenbetrieb übernimmt der Verdampfer die Heizfunktion.

Vorzugsweise wird als Kältemittel CO₂ verwendet. Andere Kältemittel sind jedoch auch möglich.

Bevorzugt wird ein Kompressor-Regelventil und eine Vorrichtung zur Umschaltung der Kältemittel-Strömungsrichtung elektrisch gesteuert.

Besonders vorteilhaft ist ein einstellbares Hubvolumen des Kältemittel-Verdichters zur Steuerung der Kälteleistung (AC-Betrieb) und der Heizleistung der Wärmepumpe.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung einer erfindungsgemäßen Klimaanlage im AC-Betrieb, wobei nur die in diesem Betrieb relevanten Komponenten dargestellt sind, und
- Fig. 2: eine schematische Darstellung der Klimaanlage von Fig. 1 im Wärmepumpen-Betrieb.

Eine Klimaanlage 1 weist einen Kreislauf 2 auf mit einem Kältemittel-Verdichter 3, einem diesem in Strömungsrichtung nachgeschalteten ersten Wärmetauscher 4, der im AC-Betrieb als Gaskühler dient, einem inneren Wärmetauscher 5, einem Expansionsorgan 7 mit zwei antiparallelen Bypässen und einem zweiten Wärmetauscher 8, der im AC-Betrieb als Verdampfer dient.

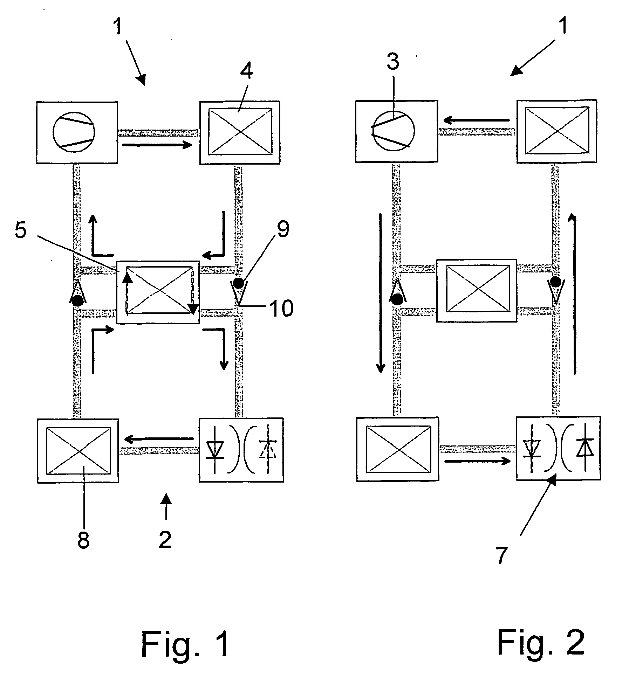

Der Kreislauf 2 wird im AC-Betrieb, wie in Fig. 1 dargestellt, von Kältemittel im Uhrzeigersinn durchströmt. Dabei erfolgt im inneren Wärmetauscher 5 ein Wärmeaustausch zwischen vom ersten Wärmetauscher 4 kommendem Kältemittel und vom zweiten Wärmetauscher 8 kommendem Kältemittel.

Erfolgt ein Moduswechsel auf Wärmepumpen-Betrieb durch Überkreuzschaltung von Saug- und Hochdruckanschluss am oder im Kältemittel-Verdichter 3, wird der innere Wärmetauscher 4 auf Grund der Anordnung von Rückschlagventilen 9 in entsprechenden Leitungen außer Funktion gesetzt. Auf Grund der umgekehrten Durchströmungsrichtung wird der Kreislauf 2, wie in Fig. 2 dargestellt, entgegen dem Uhrzeigersinn durchströmt. Dabei übernimmt der erste Wärmetauscher 4 die Funktion eines Verdampfers und der zweite Wärmetauscher 8 wirkt als Zuheizer.

Das mit zwei antiparallelen Bypässen ausgebildete Expansionsorgan 7 kann ohne externe Steuerungsmaßnahmen in beiden Betriebsmodi, d.h. im AC-Betrieb und im Wärmepumpen-Betrieb, verwendet werden.

### Bezugszeichenliste

- 1: Klimaanlage
- 2: Kreislauf
- 3: Kältemittel-Verdichter
- 4: erster Wärmetauscher
- 5: innerer Wärmetauscher
- 7: Expansionsorgan
- 8: zweiter Wärmetauscher
- 9: Rückschlagventil
- 10: Leitung

## Patentansprüche

1. Klimaanlage, insbesondere Kraftfahrzeug-Klimaanlage (1), mit einem von einem Kältemittel durchströmten Kreislauf (2), in dem ein Kältemittel-Verdichter (3) und ein erster Wärmetauscher (4), ein innerer Wärmetauscher (5), ein Expansionsorgan (7) und ein zweiter Wärmetauscher (8) angeordnet ist, wobei im AC-Betrieb der erste Wärmetauscher (4) als Gaskühler und der zweite Wärmetauscher (8) als Verdampfer dient, und für einen Wärmepumpen-Betrieb eine Vorrichtung zur Umkehr der Strömungsrichtung des Kältemittels vorgesehen ist, und Mittel vorgesehen sind, die den inneren Wärmetauscher (5) bei umgekehrter Strömungsrichtung außer Funktion setzen, **dadurch gekennzeichnet, dass** die Mittel, die den inneren Wärmetauscher (5) bei umgekehrter Strömungsrichtung außer Funktion setzen zwei Rückschlagventile (9) umfassen und die Vorrichtung zur Umkehr der Strömungsrichtung des Kältemittels eine Überkreuzschaltung von Saug- und Hochdruckanschluss am oder im Kältemittel-Verdichter (3) umfasst und die Rückschlagventile (9) am oder im inneren Wärmetauscher (5) vorgesehen sind.

2. Klimaanlage nach einem der vorhergehenden Ansprüche, **dadurch gekennzeichnet, dass** der Kältemittel-Verdichter (3) in zwei Richtungen betreibbar oder eine entsprechend wirkende Ausgestaltung von Leitungen und Ventilen vorgesehen ist.

3. Klimaanlage nach einem der vorhergehenden Ansprüche, **dadurch gekennzeichnet, dass** im Kreislauf (2) ein Expansionsorgan (7) mit antiparallelen Bypässen vorgesehen ist.

4. Klimaanlage nach einem der vorhergehenden Ansprüche, **dadurch gekennzeichnet, dass** der im AC-Betrieb als Verdampfer dienende Wärmetauscher (8) im Wärmepumpen-Betrieb als Heizer fungiert.

5. Klimaanlage nach einem der vorhergehenden Ansprüche, **dadurch gekennzeichnet, dass** als Kältemittel CO₂ verwendet wird.

6. Klimaanlage nach einem der vorhergehenden Ansprüche, **dadurch gekennzeichnet, dass** ein Kompressor-Regelventil und eine Vorrichtung zur Umschaltung der Kältemittel-Strömungsrichtung elektrisch gesteuert werden.

7. Klimaanlage nach einem der vorhergehenden Ansprüche, **dadurch gekennzeichnet, dass** das Hubvolumen des Kältemittel-Verdichters (3) verstellbar ist.

8. Verfahren zum Betreiben einer Klimaanlage (1) gemäß einem der Ansprüche 1 bis 7, wobei im Wärmepumpen-Betrieb der Kreislauf (2) entgegen der normalen Strömungsrichtung des Kältemittels durchströmt und der innere Wärmetauscher (5) umgangen wird.

## Claims

1. Air conditioning system, in particular motor vehicle air conditioning system (1), with a circuit (2) through which refrigerant flows and which accommodates a refrigerant compressor (3) and a first heat exchanger (4), an inner heat exchanger (5), an expansion element (7) and a second heat exchanger (8), wherein the first heat exchanger (4) serves as a gas cooler and the second heat exchanger (8) serves as an evaporator in the AC mode, and wherein a device for reversing the flow direction of the refrigerant is provided for the heat pump mode and means are provided to deactivate the inner heat exchanger (5) while the flow direction is reversed, **characterised in that** the means which deactivate the inner heat exchanger (5) while the flow direction is reversed comprise two non-return valves (9), and **in that** the device for reversing the flow direction of the refrigerant comprises a cross-over circuit of the suction and high-pressure connections on or in the refrigerant compressor (3), and **in that** the non-return valves (9) are provided on or in the inner heat exchanger (5).

2. Air conditioning system according to any of the preceding claims, **characterised in that** the refrigerant compressor (3) can be operated in two directions or a correspondingly acting configuration of lines and valves is provided.

3. Air conditioning system according to any of the preceding claims, **characterised in that** an expansion element (7) with anti-parallel bypasses is provided in the circuit (2).

4. Air conditioning system according to any of the preceding claims, **characterised in that** the heat exchanger (8) serving as an evaporator in the AC mode acts as a heater in the heat pump mode.

5. Air conditioning system according to any of the preceding claims, **characterised in that** CO₂ is used as a refrigerant.

6. Air conditioning system according to any of the preceding claims, **characterised in that** a compressor control valve and a device for reversing the refrigerant flow direction are controlled electrically.

7. Air conditioning system according to any of the preceding claims, **characterised in that** the stroke volume of the refrigerant compressor (3) is adjustable.

8. Method for operating an air conditioning system according to any of claims 1 to 7, wherein, in the heat pump mode, the refrigerant flows through the circuit (2) against the normal flow direction and the inner heat exchanger (5) is bypassed.

## Revendications

1. Système de climatisation, en particulier système de climatisation (1) pour véhicule automobile, comprenant un circuit (2) traversé par un fluide frigorigène, circuit dans lequel sont disposés un compresseur de fluide frigorigène (3) et un premier échangeur de chaleur (4), un échangeur de chaleur intérieur (5), un détendeur (7) et un deuxième échangeur de chaleur (8), où, au cours du fonctionnement en mode de commande adaptative, le premier échangeur de chaleur (4) sert de refroidisseur de gaz, le deuxième échangeur de chaleur (8) servant d'évaporateur, et, pour un fonctionnement de la pompe à chaleur, il est prévu un dispositif servant à l'inversion de la direction d'écoulement du fluide frigorigène, et il est prévu des moyens qui, lorsque la direction d'écoulement est inversée, mettent l'échangeur de chaleur intérieur (5) hors de fonctionnement,
**caractérisé en ce que** les moyens qui, lorsque la direction d'écoulement est inversée, mettent l'échangeur de chaleur intérieur (5) hors de fonctionnement, comprennent deux clapets antiretour (9), et le dispositif servant à l'inversion de la direction d'écoulement du fluide frigorigène, comprend un circuit croisé d'un raccord d'aspiration et de haute pression placé sur ou dans le compresseur de fluide frigorigène (3), et les clapets antiretour (9) sont prévus sur ou dans l'échangeur de chaleur intérieur (5).

2. Système de climatisation selon la revendication 1, **caractérisé en ce que** le compresseur de fluide frigorigène (3) peut être actionné dans deux directions, ou bien il est prévu une configuration de conduites et de soupapes fonctionnant en conséquence.

3. Système de climatisation selon l'une ou l'autre des revendications précédentes, **caractérisé en ce qu'**il est prévu, dans le circuit (2), un détendeur (7) comportant des dérivations antiparallèles.

4. Système de climatisation selon l'une quelconque des revendications précédentes, **caractérisé en ce que** l'échangeur de chaleur (8) servant d'évaporateur au cours du fonctionnement en mode de commande adaptative fonctionne comme dispositif de chauffage au cours du fonctionnement de la pompe à chaleur.

5. Système de climatisation selon l'une quelconque des revendications précédentes, **caractérisé en ce que** l'on utilise du CO₂ comme fluide frigorigène.

6. Système de climatisation selon l'une quelconque des revendications précédentes, **caractérisé en ce qu'**une soupape de régulation du compresseur et un dispositif servant à l'inversion de la direction d'écoulement du fluide frigorigène sont commandés électriquement.

7. Système de climatisation selon l'une quelconque des revendications précédentes, **caractérisé en ce que** la cylindrée du compresseur de fluide frigorigène (3) est réglable.

8. Procédé de fonctionnement d'un système de climatisation (1) selon l'une quelconque des revendications 1 à 7, où, au cours du fonctionnement de la pompe à chaleur, le circuit (2) est traversé dans le sens inverse de la direction d'écoulement normale du fluide frigorigène et l'échangeur de chaleur intérieur (5) est contourné.
